**Europäisches Patentamt**

**European Patent Office**

**Office européen des brevets**

(19)

(11) Veröffentlichungsnummer : **0 344 405 B1**

(12)

# EUROPÄISCHE PATENTSCHRIFT

(45) Veröffentlichungstag der Patentschrift :
**19.02.92 Patentblatt 92/08**

(51) Int. Cl.$^5$ : **F16F 13/00,** F16F 1/38

(21) Anmeldenummer : **89102541.3**

(22) Anmeldetag : **15.02.89**

(54) **Hydraulisch dämpfendes Gummilager.**

(30) Priorität : **30.05.88 DE 3818287**

(43) Veröffentlichungstag der Anmeldung :
**06.12.89 Patentblatt 89/49**

(45) Bekanntmachung des Hinweises auf die
Patenterteilung :
**19.02.92 Patentblatt 92/08**

(84) Benannte Vertragsstaaten :
**BE FR GB IT NL SE**

(56) Entgegenhaltungen :
**EP-A- 248 714**

(56) Entgegenhaltungen :
**EP-A- 0 207 194**
**EP-A- 0 242 254**
**DE-C- 2 703 038**
**DE-C- 2 755 117**

(73) Patentinhaber : **Boge A.G.**
**Bogestrasse 50**
**W-5208 Eitorf/Sieg (DE)**

(72) Erfinder : **Brenner, Heinrich**
**Am Thurmberg 11**
**W-5483 Ahrweiler (DE)**
Erfinder : **Reuter, Horst**
**Am Sonnenhang 9**
**W-5307 Wachtberg-Oberbachem (DE)**

## Beschreibung

Die Erfindung betrifft ein hydraulisch dämpfendes Gummilager bestehend aus einem Innenrohr, einem konzentrisch oder exzentrisch dazu mit Abstand angeordneten Außenrohr und dazwischen eingesetztem Gummiteil, in welchem mindestens eine dämpfungsmittelgefüllte Kammer angeordnet ist, wobei auf jeder Stirnseite des Gummilagers mindestens ein elastischer Anschlagkörper vorgesehen ist, welcher radial sich erstreckend zwischen dem Innenrohr und dem Außenrohr angeordnet und mit dem Innen- oder Außenrohr fest verbunden ist.

Es sind Gummilager bekannt (z.B. DE-C-03 27 038, DE-C-55 27 117), die aus einer äußeren Lagerhülse und einem von einem Elastomerkörper im inneren gehaltenen Innenteil bestehen, wobei der Elastomerkörper oberhalb und unterhalb des Innenteiles Aussparungen als Federungsraum aufweist. Das metallische Innenteil ist an einer der an die Aussparungen angrenzenden Außenseite mit einer in Längsrichtung verlaufenden Ausnehmung versehen, in die ein elastischer Anschlagkörper eingesetzt ist. Bei der Anwendung solcher Anschlagkörper im Inneren einer mit Hydraulikflüssigkeit gefüllten Kammer eines hydraulisch dämpfenden Gummilagers treten im vorgespannten Zustand des Gummilagers und bei gleichzeitig auftretender Verdrehung Geräusche auf, da der Gummianschlagpuffer auf der Innenwand des Außenrohres ruckartig gleitet durch den Stick-Slip-Effekt. Diese Geräuschbildunq läßt sich durch biegeweiche Gestaltung des Gummianschlagpuffers, durch Kunststoffgleitbuchsen oder durch Flüssigkeiten mit besseren Gleiteigenschaften zwar mildern, aber nicht beseitigen.

Darüber hinaus sind hydraulisch dämpfende Gummilager bekannt (z.B. EP-A - 248/714, EP-A - 242/254), bei denen außerhalb der Kammer Anschlagkörper vorgeseben sind. Diese Anschlagkörper sind jeweils integrierter Bestandteil des Gummilagers und sind konstruktionsbedingt, je nach Typ des Gummilagers, speziell ausgelegt. Nachteilig ist somit, daß eine Änderung der Geometrie oder der Vorspannung des Anschlagkörpers eine Änderung des gesamten Gummilagers nach sich zieht. Das Gummilager gemäß der EP-A-248 714 entspricht dem Oberbegriff.

Aufgabe der Erfindung ist es, ein hydraulisch dämpfendes Gummilager zu schaffen, welches bei Verdrehung im vorgespannten Zustand eine Geräuschbildung vermeidet und welches darüber hinaus mit geringem Aufwand in verschiedenen Einsatzgebieten mit unterschiedlichen Vorspannungen versehen werden kann.

Zur Lösung dieser Aufgabe ist erfindungsgemäß ein Gummilager gemäß Anspruch 1 vorgesehen.

Bei dieser Ausbildung ist von Vorteil, daß der Anschlagkörper aus der dämpfungsmittelgefüllten Kammer entfernt und an der Stirnseite des Gummilagers angeordnet wird. Durch die Verlegung der Basis des Anschlagpuffers nach außen läßt sich der Reibradius und damit die Bewegung bei Verdrehung des Gummilagers in etwa halbieren. Auf diese Weise kann eine Geräuschbildung des Gummikörpers auch im vorgespannten Zustand des Gummilagers vermieden werden.

Ein weiteres wesentliches Merkmal sieht vor, daß die Keilstücke im Vergleich zueinander unterschiedliche Dicken aufweisen.

Eine einwandfreie Zentrierung und Positionierung des Anschlagkörpers wird dadurch erzielt, indem das Innenrobr einen von der runden Form abweichenden Querschnitt aufweist und der Haltering mit einer entsprechenden Innenfläche versehen ist.

Bei dieser Ausbildung ist von Vorteil, daß bei gleichbleibendem Gummilager eine weiche Federkennlinie im abgebobenen Zustand des Anschlagkörpers durch unterschiedliche Dicken der Keilstücke in höhere oder niedrigere Lastbereiche verschoben werden kann. Durch die variable Vorspannung des Anschlagkörpers können unterschiedliche Lastenhefte bei unterschiedlich schweren Kraftfahrzeugen und dabei bei gleichen Gummilagern erfüllt werden. Es lassen sich im Prinzip unterschiedliche Lagervarianten erzeugen, wobei nur eine Vulkanisierform erforderlich ist, da die Variation der Vorspannung durcb unterschiedlich dicke Keilstücke erfolgt.

Bevorzugte Ausführungsbeispiele der Erfindung sind in den Zeichnungen schematisch dargestellt.
Es zeigt:
Figur 1 ein hydraulisch dämpfendes Gummilager im Schnitt
Figur 2 das in Figur 1 dargestellte Gummilager in Ansicht
Figur 3 verschieden erzielbare Federkraftkennlinien bei Verwendung von verschieden dicken Keilstücken.

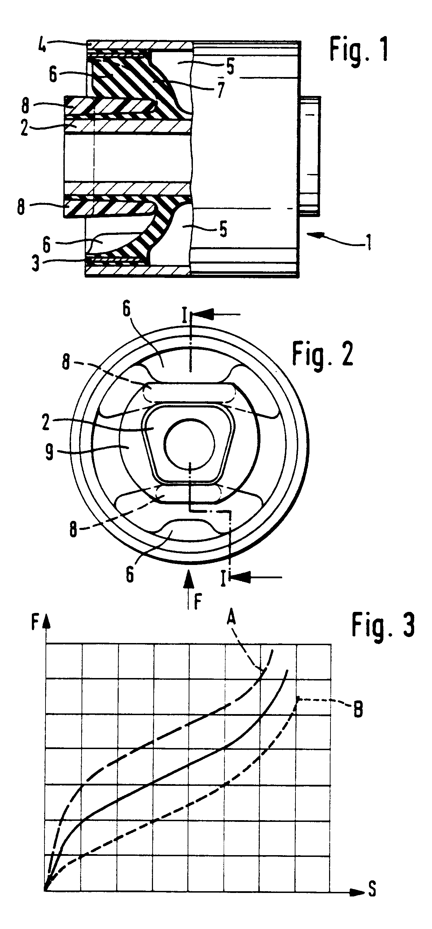

Das in Figur 1 dargestellte hydraulisch dämpfende Gummilager 1 besteht aus einem Innenrohr 2 und einem im Abstand dazu konzentrisch angeordneten Außenrohr 4, wobei das dazwiscben eingesetzte Gummiteil 7 dämpfungsmittelgefüllte Kammern 5 aufweist Diese mit Dämpfungsmittel gefüllte Kammern 5 sind hydraulisch miteinander verbunden. Das Gummiteil 7 ist auf seiner Außenseite mit dem Außenteil 3 verbunden und zusammen mit diesem im Außenrobr 4 aufgenommen.

Auf der Stirnseite des hydraulisch dämpfenden Gummilagers 1 ist ein Anschlagkörper 6 im Abstand zum Innenrohr 2 angeordnet, der mit dem Außenteil 3 fest, z.B. durch Vulkanisation verbunden ist.

2

Die Vorspannung des Anschlagkörpers 6 wird durch das axial eingeschobene Keilstück 8 erzeugt, welches einstückig mit dem Haltering 9 hergestellt und auf dem Innenrohr 2 zentriert und abgestützt ist.

In der Figur 2 ist das hydraulisch dämpfende Gummilager 1 der Figur 1 in Ansicht dargestellt, wobei das Innenrohr 2 einen vom runden Querschnitt abweichenden Querschnitt aufweist, so daß eine problemlose Zentrierung und Abstützung des Halteringes 9 zusammen mit den Keilstücken 8 erfolgen kann. In den Ausnehmungen des Gummiteiles 7 sind die Anschlagkörper 6 angeordnet.

Die Figur 3 zeigt ein Kraft-Weg-Diagramm, wobei bei gleichbleibendem hydraulisch dämpfenden Gummilager 1 eine weiche Federkennlinie im abgehobenen Zustand des Anschlagkörpers 6 erzielt wird, welche bei unterschiedlichen Dicken der Keilstücke 8 in eine Kennlinie A eines höheren Lastbereiches oder in eine Kennlinie B eines niedrigeren Lastbereiches verschoben werden kann.

Bezugszeichenliste

1 - Hydraulisch dämpfendes Gummilager
2 - Innenrohr
3 - Außenteil
4 - Außenrohr
5 - Kammer
6 - Anschlagkörper
7 - Gummiteil
8 - Keilstück.
9 - Haltering

**Patentansprüche**

1. Hydraulisch däm fendes Gummilager (1) bestehend aus einem Innenrohr (2), einem konzentrisch oder exzentrisch dazu mit Abstand angeordneten Außenrohr (4) und dazwischen eingesetztem, radial vorgespanntem Gummiteil (7), in welchem mindestens eine dämpfungsmittelgefüllte Kammer (15) angeordnet ist, wobei auf jeder Stirnseite des Gummilagers (1) mindestens ein elastischer Anschlagkörper (6) vorgesehen ist, welcher außerhalls der Kammer (5) und radial sich erstreckend swischen dem Innenrohr (2) und dem Außenrohr (4) angeordnet und mit einem des Innen- oder Außenrohrs (2,4) fest verbunden ist,
dadurch gekennzeichnet, daß auf jeder Stirnseite des Gummilagers (1) mindestens ein mit dem anderen Rohr (4) verbundenes und radial in Richtung des Anschlagkörpers (6) sich erstreckendes Keilstück (8) vorgesehen ist, durch das die radiale Vorspannung des Gummilagers (1) erzeugt ist, wobei das Weilstück (8) ab einem definierten Weg (5) in radialer Richtung vom An-Schlagkörper (6) abhebt und dann einen Gegenauschlag für den Anschlagkörper (6) bildet, und daß das Keilstück (8) über einen Haltering (9) an dem anderen Rohr (2) fixiert ist, wobei die Verbindungsfläche des Halteringes (9) und die entsprechende benachbarte Fläche des Rohres (2) einen von der runden Form abweichenden Querschnitt aufweisen.

2. Gummilager nach Ansprich 1,
dadurch gekennzeichnet, daß Keilstücke (8) im Vergleich zueinander mit unterschiedlichen Dicken vorgesehen sind.

**Claims**

1. Hydraulically damped rubber mounting (1) comprising an inner tube (2), an outer tube (4) arranged spaced from it concentrically or eccentrically and a radially pre-stressed rubber component ( 7 ) inserted between them, in which there is arranged at least one chamber (5) filled with damping medium, at least one elastic stop member (6) being provided on each face of the rubber mounting (1), which is arranged outside the chamber (5) and extending radially between the inner tube (2) and the outer tube (4) and is rigidly secured to one of the inner or outer tubes (2,4),
characterised in that on each face of the rubber mounting (1) there is provided at least one wedge member (8) connected to the other tube (4) and extending radially in the direction of the stop member (6), by which wedge member the radially pre-loading of the mounting (1) is achieved, the wedge member (8) lifting away a defined path or paths in a radially direction away from the stop member (6) and then forming a counter-stop for the stop member (6), that the wedge member (8) is secured to the other tube (2) by a retaining ring (9), the connecting surfaces of the retaining ring (9 ) and the corresponding adjacent surfaces of the tube (2) having a cross-

EP 0 344 405 B1

section which departs from the round shape.

2. Rubber mounting according to Claim 1 characterised in that the wedge members (8) are provided with mutually differing thicknesses.

**Revendications**

1. Support en caoutchouc (1) à amortissement hydraulique composé d'un tube intérieur (2), d'un tube extérieur (4) disposé concentriquement ou excentriquement au premier, à un certain écartement, et un élément de caoutchouc (7) soumis à une précontrainte radiale, interposé entre les deux tubes et dans lequel est ménagée au moins une chambre (5) remplie d'un fluide d'amortissement, cependant que, sur chaque face terminale du support en caoutchouc (1), est prévu au moins un corps de butée élastique (6) qui est disposé à l'extérieur de la chambre (5) et entre le tube intérieur (2) et le tube extérieur (4) en s'étendant radialement et est fixé rigidement à l'un des tubes intérieur et extérieur (2, 4), caractérisé en ce que, sur chaque face frontale du support en caoutchouc (1), est prévu au moins un coin (8) solidaire de l'autre tube (4) et s'étendant radialement vers le corps de butée (6), et qui engendre la précontrainte radiale du support en caoutchouc (1), le coin (8) s'écartant radialement du corps de butée (6) à partir d'une course (S) définie et formant alors une contre-butée pour le corps de butée (6), et en ce que le coin (9) est fixé à l'autre tube (2) à l'aide d'une bague de retenue (9), la surface de fixation de la bague de retenue (9) et la surface correspondante adjacente du tube (2) présentant une section transversale qui diffère de la forme ronde.

2. Support en caoutchouc selon la revendication 1, caractérisé en ce qu'il est prévu des coins (8) possédant des épaisseurs qui diffèrent de l'un à l'autre.

4

Fig. 1

Fig. 2

Fig. 3